# EUROPEAN PATENT APPLICATION

(11) **EP 4 631 699 A1**
(43) Date of publication of application: **15.10.2025**
(21) Application number: 25167664.9
(22) Date of filing: 01.04.2025
(51) Int. Cl.: B29C 64/255, B08B 7/02, B22F 10/14, B22F 10/66, B22F 10/68, B29C 64/35, B33Y 30/00, B33Y 40/20, B22F 12/00

(54) **AUTOMATED DE-POWDERING OF ADDITIVE MANUFACTURING BUILD**

(30) Priority: 11.04.2024 US 202463632790 P
(71) Applicant: General Electric Company, Cincinnati, Ohio 45215 (US)
(72) Inventor: LANG, Jay Matthew, West Chester, Ohio, 45069 (US); SHI, Jinjie, West Chester, Ohio, 45069 (US); NASR, Hojjat, Evendale, Ohio, 45241 (US); SPRAGUE, Connor, West Chester, Ohio, 45069 (US); TUBESING, Chris, West Chester, Ohio, 45069 (US); FEDYK, Glen Charles, West Chester, Ohio, 45069 (US); MURPHY, William Cosmo, West Chester, Ohio, 45069 (US)
(74) Representative: Hafner & Kohl PartmbB

(57) **Abstract**

A de-powdering system for additively manufactured objects includes an enclosure defining a cavity configured to support an additive manufacturing build. The enclosure includes a wall defining a lower boundary of the cavity, and the wall includes one or more flow channels. A sleeve is disposable in the cavity to at least partially surround the additive manufacturing build. At least one vibration mechanism is coupled to the sleeve and is actuatable to induce vibrations to the additive manufacturing build to loosen at least a portion of a powder build material from one or more objects suspended within the powder build material. The powder build material is removed from the cavity via the one or more flow channels.

## Description

### FIELD

The present disclosure generally pertains to additive manufacturing machines and systems, and more particularly, systems and methods for automated de-powdering of an additive manufacturing build.

### BACKGROUND

Three-dimensional objects may be additively manufactured using an additive manufacturing machine. One type of additive manufacturing is binder jetting. In binder jet additive manufacturing, a liquid binder is used to join particles of a powder to form a three-dimensional object. For example, a controlled pattern of the liquid binder is applied to successive layers of the powder in a powder bed such that the layers of the material adhere to one another to form a three-dimensional green part. Through subsequent processing (e.g., sintering), the three-dimensional green part can be formed into a finished three-dimensional part.

### BRIEF DESCRIPTION OF THE DRAWINGS

A full and enabling disclosure, including the best mode thereof, directed to one of ordinary skill in the art, is set forth in the specification, which makes reference to the appended figures, in which:
FIG. 1A schematically depicts an additive manufacturing build in accordance with exemplary embodiments of the present disclosure.
FIG. 1B schematically depicts a de-powdering system in accordance with exemplary embodiments of the present disclosure.
FIG. 2 is a schematic diagram depicting another de-powdering system in accordance with exemplary embodiments of the present disclosure.
FIG. 3 is a schematic diagram depicting a sleeve that may be used with the de-powdering systems according to exemplary embodiments of the present disclosure.
FIG. 4 is a schematic diagram depicting an isometric view of an enclosure of the de-powdering system of FIG. 2 according to exemplary embodiments of the present disclosure.
FIG. 5 is a schematic diagram depicting another sleeve that may be used with the de-powdering systems according to exemplary embodiments of the present disclosure.
FIG. 6A schematically depicts an additive manufacturing build in accordance with another exemplary embodiment of the present disclosure.
FIG. 6B schematically depicts an additive manufacturing build in accordance with another exemplary embodiment of the present disclosure.
FIG. 7 is a block diagram of a computing system in accordance with various aspects of the present disclosure.
FIG. 8 depicts a method for automated de-powdering of an additive manufacturing build in accordance with an exemplary aspect of the present disclosure.

### DETAILED DESCRIPTION

Reference will now be made in detail to present embodiments of the disclosure, one or more examples of which are illustrated in the accompanying drawings. The detailed description uses numerical and letter designations to refer to features in the drawings. Like or similar designations in the drawings and description have been used to refer to like or similar parts of the disclosure.

The word "exemplary" is used herein to mean "serving as an example, instance, or illustration." Any implementation described herein as "exemplary" is not necessarily to be construed as preferred or advantageous over other implementations. Additionally, unless specifically identified otherwise, all embodiments described herein should be considered exemplary.

The singular forms "a," "an," and "the" include plural references unless the context clearly dictates otherwise.

The term "at least one of" in the context of, e.g., "at least one of A, B, or C" refers to only A, only B, only C, or any combination of A, B, and C.

As used herein, the terms "first," "second," and "third" may be used interchangeably to distinguish one component from another and are not intended to signify location or importance of the individual components.

Here and throughout the specification and claims, range limitations are combined and interchanged, such ranges are identified and include all the sub-ranges contained therein unless context or language indicates otherwise. For example, all ranges disclosed herein are inclusive of the endpoints, and the endpoints are independently combinable with each other.

Approximating language, as used herein throughout the specification and claims, is applied to modify any quantitative representation that could permissibly vary without resulting in a change in the basic function to which it is related. Accordingly, a value modified by a term or terms, such as "about", "approximately", and "substantially", are not to be limited to the precise value specified. In at least some instances, the approximating language may correspond to the precision of an instrument for measuring the value, or the precision of the methods or machines for constructing or manufacturing the components and/or systems. For example, the approximating language may refer to being within a 1, 2, 4, 10, 15, or 20 percent margin. These approximating margins may apply to a single value, either or both endpoints defining numerical ranges, and/or the margin for ranges between endpoints.

The terms "coupled," "fixed," "attached to," and the like refer to both direct coupling, fixing, or attaching, as well as indirect coupling, fixing, or attaching through one or more intermediate components or features, unless otherwise specified herein.

The term "adjacent" as used herein with reference to two walls and/or surfaces refers to the two walls and/or surfaces contacting one another, or the two walls and/or surfaces being separated only by one or more nonstructural layers and the two walls and/or surfaces and the one or more nonstructural layers being in a serial contact relationship (i.e., a first wall/surface contacting the one or more nonstructural layers, and the one or more nonstructural layers contacting the a second wall/surface).

As used herein, the terms "additively manufactured" or "additive manufacturing techniques or processes" refer generally to manufacturing processes wherein successive layers of material(s) are provided on each other to "build-up," layer-by-layer, a three-dimensional component. The successive layers generally fuse together to form a monolithic component which may have a variety of integral sub-components. Although additive manufacturing technology is described herein as enabling fabrication of complex objects by building objects point-by-point, layer-by-layer, typically in a vertical direction, other methods of fabrication are possible and within the scope of the present subject matter. For example, although the discussion herein refers to the addition of material to form successive layers, one skilled in the art will appreciate that the methods and structures disclosed herein may be practiced with any additive manufacturing technique or manufacturing technology. For example, embodiments of the present disclosure may use layer-additive processes, layer-subtractive processes, or hybrid processes.

Suitable additive manufacturing techniques in accordance with the present disclosure include, for example, Fused Deposition Modeling (FDM), Selective Laser Sintering (SLS), 3D printing such as by inkjets, laser jets, and binder jets, Stereolithography (SLA), Direct Selective Laser Sintering (DSLS), Electron Beam Sintering (EBS), Electron Beam Melting (EBM), Laser Engineered Net Shaping (LENS), Laser Net Shape Manufacturing (LNSM), Direct Metal Deposition (DMD), Digital Light Processing (DLP), Direct Selective Laser Melting (DSLM), Selective Laser Melting (SLM), Direct Metal Laser Melting (DMLM), and other known processes.

The additive manufacturing processes described herein may be used for forming components using any suitable material. For example, the material may be plastic, metal, concrete, ceramic, polymer, epoxy, photopolymer resin, or any other suitable material that may be in solid, liquid, powder, sheet material, wire, or any other suitable form or combinations thereof. More specifically, according to exemplary embodiments of the present subject matter, the additively manufactured components described herein may be formed in part, in whole, or in some combination of materials including but not limited to pure metals, nickel alloys, chrome alloys, titanium, titanium alloys, magnesium, magnesium alloys, aluminum, aluminum alloys, and nickel or cobalt based superalloys (e.g., those available under the name Inconel^{®} available from Special Metals Corporation). These materials are examples of materials suitable for use in the additive manufacturing processes described herein, and may be generally referred to as "additive materials."

In addition, one skilled in the art will appreciate that a variety of materials and methods for bonding those materials may be used and are contemplated as within the scope of the present disclosure. As used herein, references to "fusing" may refer to any suitable process for creating a bonded layer of any of the above materials. For example, if an object is made from polymer, fusing may refer to creating a thermoset bond between polymer materials. If the object is epoxy, the bond may be formed by a crosslinking process. If the material is ceramic, the bond may be formed by a sintering process. If the material is powdered metal, the bond may be formed by a melting or sintering process. One skilled in the art will appreciate that other methods of fusing materials to make a component by additive manufacturing are possible, and the presently disclosed subject matter may be practiced with those methods.

In addition, the additive manufacturing process disclosed herein allows a single component to be formed from multiple materials. Thus, the components described herein may be formed from any suitable mixtures of the above materials. For example, a component may include multiple layers, segments, or parts that are formed using different materials, processes, and/or on different additive manufacturing machines. In this manner, components may be constructed which have different materials and material properties for meeting the demands of any particular application. In addition, although the components described herein are constructed entirely by additive manufacturing processes, it should be appreciated that in alternate embodiments, all or a portion of these components may be formed via casting, machining, and/or any other suitable manufacturing process. Indeed, any suitable combination of materials and manufacturing methods may be used to form these components.

An exemplary additive manufacturing process will now be described. Additive manufacturing processes fabricate components using three-dimensional (3D) information, for example a three-dimensional computer model, of the component. Accordingly, a three-dimensional design model of the component may be defined prior to manufacturing. In this regard, a model or prototype of the component may be scanned to determine the three-dimensional information of the component. As another example, a model of the component may be constructed using a suitable computer aided design (CAD) program to define the three-dimensional design model of the component.

The design model may include 3D numeric coordinates of the entire configuration of the component including both external and internal surfaces of the component. For example, the design model may define the body, the surface, and/or internal passageways such as openings, support structures, etc. **In** one exemplary embodiment, the three-dimensional design model is converted into a plurality of slices or segments, e.g., along a central (e.g., vertical) axis of the component or any other suitable axis. Each slice may define a thin cross section of the component for a predetermined height of the slice. The successive cross-sectional slices together form the 3D component. The component is then "built-up" slice-by-slice, or layer-by-layer, until finished.

**In** this manner, the components described herein may be fabricated using the additive process, or more specifically each layer is successively formed, e.g., by fusing or polymerizing a plastic using laser energy or heat or by sintering or melting metal powder. For example, a particular type of additive manufacturing process may use an energy beam, for example, an electron beam or electromagnetic radiation such as a laser beam, to sinter or melt a powder material. Any suitable laser and laser parameters may be used, including considerations with respect to power, laser beam spot size, and scanning velocity. The build material may be formed by any suitable powder or material selected for enhanced strength, durability, and useful life, particularly at high temperatures.

Each successive layer may be, for example, between about 10 µm and 200 µm, although the thickness may be selected based on any number of parameters and may be any suitable size according to alternative embodiments. Therefore, utilizing the additive formation methods described above, the components described herein may have cross sections as thin as one thickness of an associated powder layer, e.g., 10 µm, utilized during the additive formation process.

**In** addition, utilizing an additive process, the surface finish and features of the components may vary as needed depending on the application. For example, the surface finish may be adjusted (e.g., made smoother or rougher) by selecting appropriate laser scan parameters (e.g., laser power, scan speed, laser focal spot size, etc.) during the additive process, especially in the periphery of a cross-sectional layer which corresponds to the part surface. For example, a rougher finish may be achieved by increasing laser scan speed or decreasing the size of the melt pool formed, and a smoother finish may be achieved by decreasing laser scan speed or increasing the size of the melt pool formed. The scanning pattern and/or laser power can also be changed to change the surface finish in a selected area.

Notably, in exemplary embodiments, several features of the components described herein were previously not possible due to manufacturing restraints. However, the present inventors have advantageously utilized current advances in additive manufacturing techniques to develop exemplary embodiments of such components generally in accordance with the present disclosure. While the present disclosure is not limited to the use of additive manufacturing to form these components generally, additive manufacturing does provide a variety of manufacturing advantages, including ease of manufacturing, reduced cost, greater accuracy, etc.

**In** this regard, utilizing additive manufacturing methods, even multi-part components may be formed as a single piece of continuous metal, and may thus include fewer sub-components and/or joints compared to prior designs. The integral formation of these multi-part components through additive manufacturing may advantageously improve the overall assembly process. For example, the integral formation reduces the number of separate parts that must be assembled, thus reducing associated time and overall assembly costs. Additionally, existing issues with, for example, leakage, joint quality between separate parts, and overall performance may advantageously be reduced.

Also, the additive manufacturing methods described above enable much more complex and intricate shapes and contours of the components described herein. For example, such components may include thin additively manufactured layers and unique fluid passageways with integral mounting features. In addition, the additive manufacturing process enables the manufacture of a single component having different materials such that different portions of the component may exhibit different performance characteristics. The successive, additive nature of the manufacturing process enables the construction of these novel features. As a result, the components described herein may exhibit improved functionality and reliability.

Unlike laser melting and laser sintering additive manufacturing techniques, which heat the material to consolidate and build layers of the material to form a printed part (e.g., metal or ceramic part), binder jetting uses a chemical binder to bond particles of the material into layers that form a green body of the printed part. As defined herein, the green body of the printed part is intended to denote a printed part that has not undergone heat treatment to remove the chemical binder. Chemical binding has been used in sand molding techniques to bond sand particles and form a sand mold that can be used to fabricate other parts. Similar to sand molding, in binder jet printing, the chemical binder is successively deposited into layers of powder to print the part. For example, the chemical binder (e.g., a polymeric adhesive) may be selectively deposited onto a powder bed in a pattern representative of a layer of the part being printed. Each printed layer may be cured (e.g., via heat, light, moisture, solvent evaporation, etc.) after printing to bond the particles of each layer together to form the green body part. After the green body part is fully formed, the chemical binder is removed during post-printing processes (e.g., debinding and sintering) to form a consolidated part. **In** certain post printing processes, the green body part may undergo a de-powdering process. The de-powdering process removes portions of the powder that have not been bound (e.g., adhered) by the chemical binder. However, de-powdering of the green body part is generally done before heat treating (e.g., presintering) the green body part. Heat treating the green body part removes the chemical binder and builds handling strength. Therefore, during a de-powdering processes, the green body part may have insufficient handling strength and be susceptible to damage.

The present disclosure generally provides an apparatus and technique for automated de-powdering of an additively manufactured three-dimensional object. In exemplary embodiments, the de-powdering apparatus includes an enclosure for containing or supporting an additive manufacturing build, and a sleeve insertable into the enclosure that substantially surrounds the additive manufacturing build. One or more vibration mechanisms may be actuated to transfer vibrations to the powder bed through at least one or more of the sleeve, a bottom wall of the enclosure, or directly within the powder bed. One or more of the vibration mechanisms may be independently controlled as to vibration frequency(ies) to loosen the unbound powder material while avoiding or substantially preventing damage to the green additively manufactured objects. The loosened powder build material can be easily evacuated/vacuumed from the enclosure as well as draining from the enclosure through flow channels formed in the bottom wall of the enclosure. In exemplary embodiments, the one or more vibration mechanisms are positioned at or near the bottom of the enclosure or sleeve such that the induced vibrations, in combination with gravity and the weight of the powder build material lying above, work together to separate the unbound powder material particles. In exemplary embodiments, inducing the vibrations through a sleeve is advantageous due to a thinner wall on a sleeve in comparison to a generally thicker wall of a typical build box. In exemplary embodiments, a sleeve is provided having generally a thinner wall than a wall of a typical build box such the thinner wall of the sleeve enables a greater vibration effect into the additive manufacturing build where a thicker wall of a build box may dampen the vibrations.

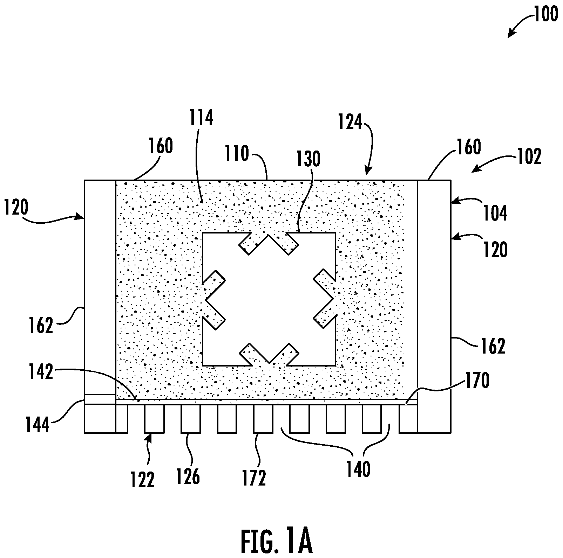

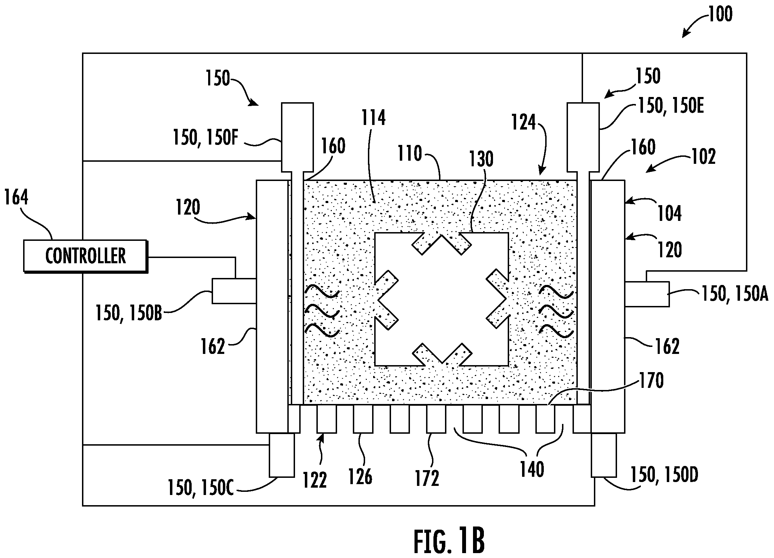

Referring now to FIGS. 1A and 1B, the presently disclosed subject matter will now be described in further detail. FIG. 1A schematically depicts an additive manufacturing build 110, and FIG. 1B schematically depicts an automated de-powdering system 100 for de-powdering the additive manufacturing build 110 in accordance with exemplary embodiments of the present disclosure. In the illustrated embodiment, an enclosure 102 supports the additive manufacturing build 110 having one or more three-dimensional parts or objects 130 suspended within a powder build material 114. As described above, in an exemplary binder jet additive manufacturing process, one or more layers of the powder build material 114 are deposited onto a build surface. A print head dispenses a binder to the one or more layers of the powder build material 114 to form the one or more objects 130 on a layer-by-layer basis. The enclosure 102 may comprise a build box 104 such that the one or more objects 130 are formed or printed on a layer-by-layer basis within the build box 104. However, it should be understood that the enclosure 102 may comprise a separate component such that the additive manufacturing build 110 may be removed from the build box 104 upon completion of the printing process and placed in the enclosure 102.

In the illustrated embodiment, the enclosure 102 includes one or more sidewalls 120 and a bottom wall 122. In exemplary embodiments, the one or more sidewalls 120 and the bottom wall 122 define a cavity 124 for receiving or supporting the additive manufacturing build 110 within the cavity 124. For example, in exemplary embodiments where the enclosure 102 is the build box 104, the bottom wall 122 may be a build plate 126 movable with respect to the one or more sidewalls 120 for receiving one or more layers of the powder build material 114 during a printing process.

In the illustrated embodiment, the bottom wall 122 defines a lower boundary of the enclosure 102. In exemplary embodiments, the bottom wall 122 includes one or more flow channels 140. The one or more flow channels 140 extend through the bottom wall 122 providing a passageway extending from the cavity 124 to an area external to the enclosure 102. In FIG. 1A, a plate 142 is disposed within the cavity 124 near a bottom portion of the enclosure 102. In exemplary embodiments, the plate 142 is disposed within the enclosure 102 to block or cover the one or more flow channels 140 during the additive manufacturing process to prevent the powder material 114 from entering or passing through the one or more flow channels 140 during the additive manufacturing process. The plate 142 is removably coupled to the enclosure 102 to enable the plate 142 to be inserted into or removed from the cavity 124. In exemplary embodiments, upon completion of the additive manufacturing process or prior to beginning a de-powdering process, the plate 142 may be removed from the enclosure 102. In exemplary embodiments, the plate 142 may be removed from the enclosure 102 via an opening 144 in the enclosure 102 such as, by way of non-limiting example, in the sidewall 120. In exemplary embodiments, instead of the plate 142, the one or more flow channels 140 may be in the form of a fine mesh or relatively small perforations such that the base layer of the additive manufacturing build may be formed without the power build material 114 passing through the one or more flow channels 140, or at least without a significant amount of the power build material 114 passing through the one or more flow channels 140.

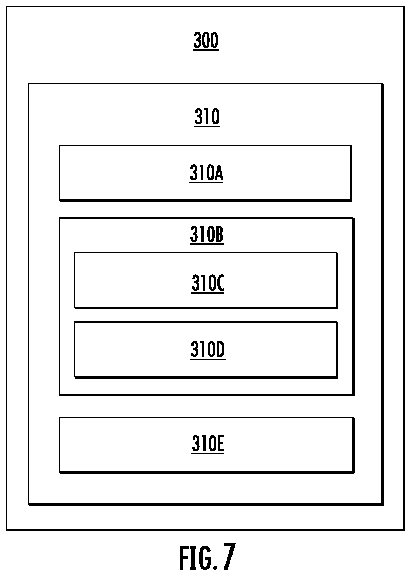

In FIG. 1B, the plate 142 (FIG. 1A) has been removed. In the illustrated embodiment, the automated de-powdering system 100 includes one or more vibration mechanisms 150 configured to induce or transmit vibrations to the additive manufacturing build 110 to break up, loosen, or separate unbound powder build material 114 from the one or more objects 130. In exemplary embodiments, the one or more vibration mechanisms 150 may be located or disposed at one or more different locations with respect to the enclosure 102. For example, in the illustrated embodiment, the one or more sidewalls 120 may each include a side or surface 160 facing inwardly toward the cavity 124 and a side or surface 162 opposite the surface 160 facing toward the exterior of the enclosure 102. In the illustrated embodiment, one or more vibration mechanisms 150A and 150B are disposed in contact with the surface 162 of the sidewall 120 to impart vibrations to the enclosure 102 via one or more of the sidewalls 120. In the illustrated embodiment, the bottom wall 122 includes a surface 170 facing inwardly toward the cavity 124 and a surface 172 opposite the surface 170 facing toward the exterior of the enclosure 102. In exemplary embodiments, one or more vibration mechanisms 150C and 150D are disposed in contact with the surface 172 of the bottom wall 122 to impart vibrations to the enclosure 102 via the bottom wall 122. However, it should be understood that the vibration mechanisms 150 may otherwise be located, such as by way of non-limiting example, only on the sidewalls 120 or only on the bottom wall 122. It should also be understood that multiple vibration mechanisms 150 may be located on a particular sidewall 120. The one or more vibration mechanisms 150 may comprise pneumatic transducers, ultrasonic transducers, or other types of contact or non-contact vibration-inducing mechanisms. Actuation or control of the one or more vibration mechanisms 150 may be automatically controlled, such as by a controller 164. The controller 164 may be configured similar to exemplary computing devices of the computing system 300 described below with reference to FIG. 7.

In the illustrated embodiment, one or more of the vibration mechanisms 150 may, additionally or alternatively, be disposed within the cavity 124. For example, in exemplary embodiments, one or more vibration mechanisms 150E and 150F may be inserted into the additive manufacturing build 110 and extend into the powder build material 114 to directly induce or transmit vibrations to the powder build material 114 from within the cavity 124. In exemplary embodiments, at least one of the vibration mechanisms 150E and 150F extend into the cavity 124 such that at least a portion of the vibration mechanism 150E or 150F contacts the bottom wall 122 (e.g., the surface 170) thereby imparting vibrations to the powder build material 114 within the cavity 124 and to the bottom wall 122. In exemplary embodiments, one or more of the vibration mechanisms 150 may be independently controlled as to vibration frequency(ies) to loosen the unbound powder material while avoiding or substantially preventing damage to the green additively manufactured objects. Actuation or control of the one or more vibration mechanisms 150 may be automatically controlled, such as by the controller 164. **In** exemplary embodiments, the vibration mechanisms 150 may be controlled to impart approximately 18,000 vibrations per minute. **In** exemplary embodiments, the vibration mechanisms 150 may be controlled to impart between 6,200 and 34,000 vibrations per minute. **In** exemplary embodiments, the vibration mechanisms 150 may be controlled to deliver ultrasonic frequencies between 20 kHz and 40 kHz. **In** exemplary embodiments, the vibration mechanisms 150 may be controlled to deliver ultrasonic frequencies of approximately 35 kHz.

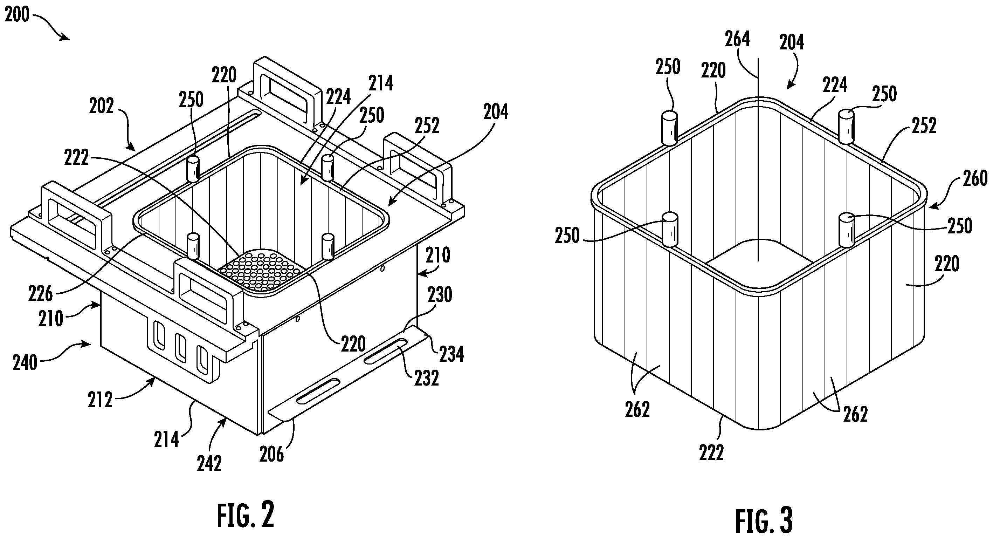

FIG. 2 schematically depicts a top isometric view of an automated de-powdering system 200 in accordance with exemplary embodiments of the present disclosure. **In** FIG. 2, the automated de-powdering system 200 includes an enclosure 202, a sleeve 204, and a plate 206. The enclosure 202 includes one or more sidewalls 210 and a bottom wall 212. The sidewalls 210 and the bottom wall 212 define a cavity 214 for supporting an additive manufacturing build therein where the bottom wall 212 defines a lower boundary of the cavity 214. **In** the illustrated embodiment, the cavity 214 is empty. **In** the illustrated embodiment, the enclosure 202 is configured having a square geometry formed by four substantially similar sidewalls 210 with each sidewall 210 sharing a common border with an adjacent sidewall 210. However, it should be understood that the enclosure 202 may be configured with a different geometry.

**In** the illustrated embodiment, the sleeve 204 includes one or more sidewalls 220 configured to extend around an internal perimeter of the cavity 214. For example, the sleeve 204 is generally configured having a shape or geometry corresponding to a shape or geometry of the cavity 214 such that the sleeve 204 is disposed in or insertable into the cavity 214 such that the sleeve 204 substantially surrounds an additive manufacturing build residing within the cavity 214. As used herein, the terms "substantially surround" and "substantially surrounding" means that the additive manufacturing build has at least 90% of its surface area facing the sleeve 204 covered by the sleeve 204, such as 95% of its surface area facing the sleeve 204 is covered by the sleeve 204. The terms "substantially surround" and "substantially surrounding" may include completely surrounds and completely surrounding, respectively. For example, in the illustrated embodiment, the cavity 214 is generally in the form of a cube such that when an additive manufacturing build of a similar geometry is disposed within the cavity 214, one side of the additive manufacturing build faces the bottom wall 212, four sides of the additive manufacturing build face the sidewalls 210 of the enclosure 202, and one side of the additive manufacturing build faces upwardly away from the enclosure 202. In this example, the sleeve 204 would substantially surround the four sides of the additive manufacturing build facing the sidewalls 210 of the enclosure 202. It should be understood that the sleeve 204 may be configured with dimensional aspects slightly less than the dimensional aspects of the cavity 214 to facilitate the insertion of the sleeve 204 into the cavity 214. Thus, in exemplary embodiments, the sleeve 204 includes an open bottom 222 to enable the sleeve 204 to be inserted into the cavity 214 while an additive manufacturing build is disposed within the cavity 214. It should be understood that when the sleeve 204 is inserted into the cavity 214 with an additive manufacturing build already residing within the cavity 214, the sleeve 204 may penetrate or extend through at least a portion of the additive manufacturing build. In exemplary embodiments, the sleeve 204 also includes an open top 224. However, it should be understood that the sleeve 204 may be configured with a closed top. It should also be understood that the additive manufacturing build may be formed within the cavity 214 with the sleeve 204 within the cavity 214.

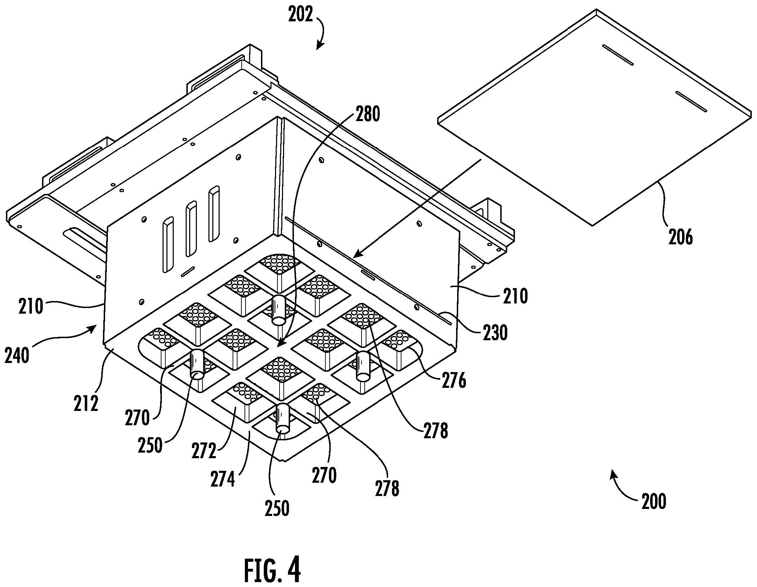

In the illustrated embodiment, the enclosure 202 also includes at least one opening 230 in at least one of the sidewalls 220 for receiving the plate 206 therethrough. For example, in exemplary embodiments, the opening 230 may comprise a slot sized or configured corresponding to a geometry of the plate 206 such that the plate 206 is removably coupled to the enclosure. In exemplary embodiments, the plate may be slidably inserted through the opening 230 and into the cavity 214, as well as being retractable from the opening 230 to withdraw the plate 206 from the cavity 214 and the enclosure 202. In exemplary embodiments, the plate 206 is configured such that, when the plate 206 is inserted into the enclosure 202, the plate 206 is proximate to and substantially covers the bottom wall 212 within the cavity 214. In exemplary embodiments, the plate 206 comprises a flat or planar component. In exemplary embodiments, a portion 234 of the plate 206 may include one or more openings 232 that function as a handle to facilitate inserting and retracting the plate 206 with respect to the enclosure 202. In exemplary embodiments, the plate 206 may be inserted into the cavity before beginning an additive manufacturing build process such that the plate 206 impedes powder build material from passing through the bottom wall 212 during the additive manufacturing process (depicted and described in greater detail in connection with FIG. 4) and removed from the cavity 214 after completion of the additive manufacturing process for a de-powdering of the additive manufacturing build.

In exemplary embodiments, an additive manufacturing build, such as the additive manufacturing build 110 (FIG. 1A), may be removed from a build box or print station and placed within the cavity 214 of the enclosure, and the sleeve 204 may be inserted into the cavity 214, before or after the additive manufacturing build 110 is placed in the cavity 214, around the additive manufacturing build 110. However, it should also be understood that the enclosure 202 itself may be a build box 240, and the bottom wall 212 may be a build plate 242 that is vertically movable within the build box 240 to facilitate the layerwise additive manufacturing of an object within the cavity 214. It should be understood that the sleeve 204 may also reside within the enclosure 202 during a print process.

In exemplary embodiments, one or more vibration mechanisms 250 are coupled to the sleeve 204 to impart vibrations to an additive manufacturing build disposed within the cavity 214 and surrounded by the sleeve 204. For example, in the illustrated embodiment, one vibration mechanism 250 is coupled to each sidewall 220 of the sleeve 204. For example, in FIG. 2, the vibration mechanism 250 is coupled to a top portion 252 of a particular sidewall 220, and each vibration mechanism 250 is located approximately midway with respect to a length of the top portion 252 of the sidewall 220 extending between or to adjacent sidewalls 220. However, it should be understood that the quantity and physical placement of the vibration mechanisms 250 may be otherwise configured. It should also be understood that, additionally or alternatively, one or more vibration mechanisms 250 may also be inserted into the additive manufacturing build, such as the vibration mechanisms 150E, 150F of FIG. 1B. As described above, the vibration mechanisms 250 may comprise pneumatic transducers, ultrasonic transducers, or other types of contact or non-contact vibration-inducing mechanisms. Actuation or control of the one or more vibration mechanisms 250 may be automatically controlled, such as by the controller 164.

FIG. 3 is a schematic diagram depicting the sleeve 204 of FIG. 2 according to exemplary embodiments of the present disclosure. In the illustrated embodiment, the sleeve 204 may comprise a frame 260 formed by the one or more sidewalls 220. The one or more sidewalls 220 are generally thinner in comparison to a generally thicker wall of a typical build box, such as the sidewalls 210 of the enclosure 202 or build box 240. In exemplary embodiments, a thickness of the sidewalls 210 is 50% to 90% of a thickness of a wall of a build box, such as the sidewalls 210 of the enclosure 202. In exemplary embodiments, a thickness of the sidewalls 210 is 40% to 50% of a thickness of a wall of a build box, such as the sidewalls 210 of the enclosure 202. In the illustrated embodiment, the sleeve 204 is configured having a square geometry formed by four substantially similar sidewalls 220 with each sidewall 220 sharing a common border with an adjacent sidewall 220. However, it should be understood that the sleeve 204 may be configured with a different geometry (e.g., if circular, a single sidewall 220). In exemplary embodiments, each sidewall 220 may include one or more stiffening ribs 262 extending parallel to a longitudinal axis 264 of the sleeve 204 (e.g., the longitudinal axis 264 extending in a direction from the top 224 to the bottom 222 parallel to at least one of the sidewalls 220). In exemplary embodiments, the one or more stiffening ribs 262 extend substantially from the top 224 to the bottom 222 of the sleeve 204 and reinforce the sidewalls 220 of the sleeve 204 to enable insertion of the sleeve 204 into the cavity 214 (FIG. 2) and sustain the vibrations induced by the one or more vibration mechanisms 250. In exemplary embodiments, the sleeve 204 includes relatively thin walls in comparison to a wall of a build box or the sidewalls 210 of the enclosure 202 to facilitate greater vibrations effects into the additive manufacturing build. The one or more stiffening ribs 262 are optional but may be needed in instances where the sleeve 204 is a relatively large sleeve corresponding to a similarly large additive manufacturing build or build box for structural rigidity of the sleeve 204. As described above, in exemplary embodiments, each sidewall 220 may have at least one vibration mechanism 250 coupled thereto, such as coupled to a respective sidewall 220 at or near the top 224 of the sleeve 204. However, it should be understood that additional vibration mechanisms 250 may be coupled to one or more of the sidewalls 220, or the vibration mechanism 250 may be omitted from one or more of the sidewalls 220. In FIG. 3, the vibration mechanisms 250 are equally spaced about the top 224 of the sleeve 204 such that each vibration mechanism 250 is located midway with respect to a length of the top portion 252 of the sidewall 220 extending between or to adjacent sidewalls 220. Placement of the vibration mechanisms 250 along the top portion 252 of the sidewalls 220 enables vibrations to be transmitted through or by the sidewalls 220 into an additive manufacturing build disposed within the cavity 214 (FIG. 2) while also enabling the sleeve 204 to be inserted into the enclosure 202 (FIG. 2) or build box 240 (FIG. 2).

FIG. 4 is a schematic diagram depicting a bottom isometric view of the enclosure 202 of FIG. 2 according to exemplary embodiments of the present disclosure. In exemplary embodiments, the bottom wall 212 includes a lattice framework or arrangement of ribs 270 extending laterally between oppositely disposed sidewalls 220. The lattice arrangement of ribs 270 define one or more recesses 272 extending upwardly from a bottom surface 274 of the bottom wall 212 toward the cavity 214 (FIG, 2). A top surface 276 of the bottom wall 212 within one or more of the recesses 272 includes one or more flow channels 278 forming an opening or passageway from the cavity 214 (FIG. 2) to an exterior area of the enclosure 202. Thus, in exemplary embodiments, the one or more flow channels 278 are disposed contiguous with the cavity 214 (FIG. 2) when the plate 206 is removed from to the enclosure 202. The plate 206 is insertable into the enclosure 202 through the opening 230. The opening 230 is located with respect to the bottom wall 212 (e.g., spaced apart from the bottom surface 274) such that when the plate is inserted into the enclosure 202, the plate 206 is disposed within the cavity 214 (FIG. 2) proximate to or in contact with the top surface 276 of the bottom wall 212 so as to cover, block, or obstruct the flow channels 278. Thus, in exemplary embodiments, when the plate 206 is disposed within the enclosure 202, powder build material is substantially prevented from exiting the cavity 214 (FIG. 2) through the flow channels 278. Thus, in exemplary embodiments when the enclosure 202 functions as the build box 240, during an additive manufacturing printing process, powder build material is substantially prevented from exiting the enclosure 202 through the flow channels 278. Removal or retraction of the plate 206 from the enclosure correspondingly unblocks or exposes the flow channels 278, thereby enabling powder build material to exit the enclosure 202 through the flow channels 278.

In the illustrated embodiment, one or more vibration mechanisms 250 are also coupled to the bottom wall 212 of the enclosure. For example, in exemplary embodiments, the one or more vibration mechanisms 250 may be secured to the bottom wall 212 at one or more intersection points 280 of the ribs 270. For example, the lattice arrangement of the ribs 270 define one or more intersection points 280 of the ribs 270 where ribs 270 extending in different directions intersect (e.g., where ribs 270 extending between one set of sidewalls 210 intersect ribs 270 extending between a different set of sidewalls 210). However, it should be understood that the one or more vibration mechanisms 250 may be otherwise located (e.g., at locations where the bottom wall 212 intersects or shares a boundary with one or more of the sidewalls 210). As described above, the vibration mechanisms 250 may comprise pneumatic transducers, ultrasonic transducers, or other types of contact or non-contact vibration-inducing mechanisms configured to induce or transmit vibrations to the additive manufacturing build via the bottom wall 212.

Thus, in exemplary embodiments, during an additive manufacturing printing process, the plate 206 may be in a fully inserted position within the enclosure 202 (or build box 240) to prevent powder build material from exiting the enclosure 202 through the flow channels 278. For a de-powdering operation, the plate 206 may be removed from the enclosure 202, thereby opening or exposing the flow channels 278. Additionally, the sleeve 204 (FIGS. 2 and 3) is inserted into the enclosure 202 such that the sleeve 204 (FIGS. 2 and 3) extends substantially about a periphery of the additive manufacturing build. The one or more vibration mechanisms 250 may be actuated (e.g., by a controller or other type of computer-based control system, or manually) to loosen or separate unbound powder material from the additively manufactured objects. In exemplary embodiments, one or more of the vibration mechanisms 250 may be independently controlled as to vibration frequency(ies) to loosen the unbound powder material while avoiding or substantially preventing damage to the green additively manufactured objects.

The one or more vibration mechanisms 250 may be actuated either before or after insertion of the sleeve 204 (FIGS. 2 and 3) into the enclosure 202. For example, one or more of the vibration mechanisms 250 located on the bottom wall 212 of the enclosure 202 may be actuated prior to the positioning of the sleeve 204 (FIGS. 2 and 3) over or around the additive manufacturing build. Such actuation may initially loosen some of the powder build material within the enclosure 202 so that the sleeve 204 (FIGS. 2 and 3) may be more easily inserted into the enclosure 202. After insertion of the sleeve 204 (FIGS. 2 and 3) into the enclosure 202, one or more of the vibration mechanisms 250 attached to the sleeve 204 (FIGS. 2 and 3) may be actuated, independently or together with one or more of the vibration mechanisms 250 attached to the bottom wall 212. It should also be understood that at least one vibration mechanism may be inserted into the additive manufacturing build within the cavity 214 (e.g., such as the vibration mechanisms 150E and 150F (FIG. 1B)).The unbound powder build material exits the enclosure 202 via the flow channels 278. The unbound powder build material may additionally or alternatively be removed by a vacuum or other mechanism. It should also be understood that the plate 206 may be removed from the enclosure 202 before or after actuation of the vibration mechanisms 250, and before or after insertion of the sleeve 204 into the enclosure 202. In exemplary embodiments where an additive manufacturing build is transferred to the enclosure 202 after completion of an additive manufacturing printing process, the above process may be similarly performed.

It should also be understood that various components of the automated de-powdering system 200 (FIGS. 2-4) may be used in the automated de-powdering system 100 (FIG. 1B), and vice versa. For example, a sleeve similar to the sleeve 204 (FIGS. 2 and 3) may be inserted into the cavity 124 (FIG. 1B) and vibrations induced via such a sleeve. Additionally, one or more vibration mechanisms, such as the vibration mechanisms 150E and 150 F (FIG. 1B), may be inserted into the additive manufacturing build 110 when disposed within the cavity 214 (FIG. 2).

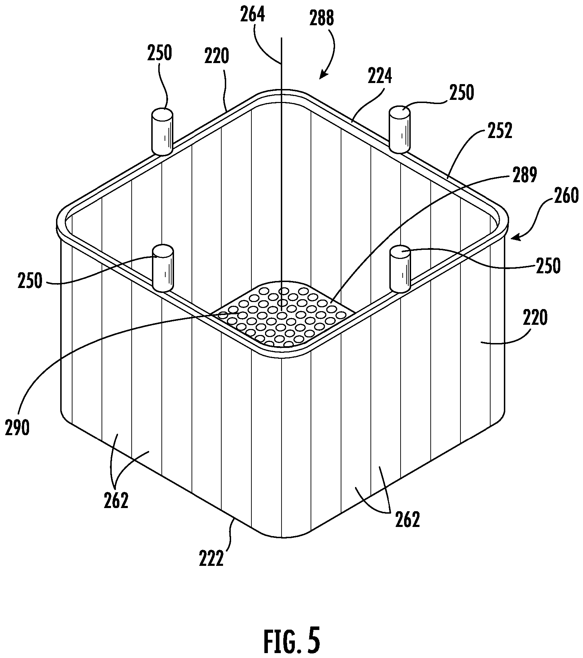

FIG. 5 is a schematic diagram depicting an exemplary sleeve 288 that may be used with the automated de-powdering system 100 (FIG. 1B) or the automated de-powdering system 200 (FIGS. 2-4) according to exemplary embodiments of the present disclosure. In the illustrated embodiment, the sleeve 288 is configured similar to the sleeve 204 (FIGS. 2 and 3) except the sleeve 288 includes a bottom wall 289 defining a lower boundary of the sleeve 288. The bottom wall 289 may also be configured thinner than a generally thicker bottom wall or build plate of a build box (e.g., similar to the sidewalls 220). The bottom wall 289 includes one or more flow channels 290. The one or more flow channels 290 form one or more openings or passageways through the bottom wall 289. In exemplary embodiments, the sleeve 288 may be placed within the enclosure 202 (FIGS. 2 and 4) or the build box 104 (FIGS. 1A and 1B) before a printing process such that the additive manufacturing build is formed within the sleeve 288 such that the sleeve 288 at least partially surrounds the additive manufacturing build. After completion of the printing process, the sleeve 288 may be removed from the enclosure 202 (FIGS. 2 and 4) or the build box 104 (FIGS. 1A and 1B), with the additive manufacturing build within the sleeve 288, for a de-powdering process as described above. For example, one or more of the vibration mechanisms 150 or 250 (FIGS. 1B, 3, and 4) may be coupled to the sleeve 288, inserted into the additive manufacturing build residing within the sleeve 288 (e.g., inserted into the additive manufacturing build residing within the sleeve 288 and in contact with the bottom wall 289), or both, and actuated to loosen unbound portions of the powder build material. The loosened portions of the unbound powder build material may exit the sleeve 288 via the one or more flow channels 290. It should be understood that if the sleeve 288 is used, the build plate 126 (FIGS. 1A and 1B) may be formed without the flow channels 140 (FIGS. 1A and 1B), and the enclosure 202 (FIGS. 2 and 4) may be formed without the flow channels 278 (FIG. 4).

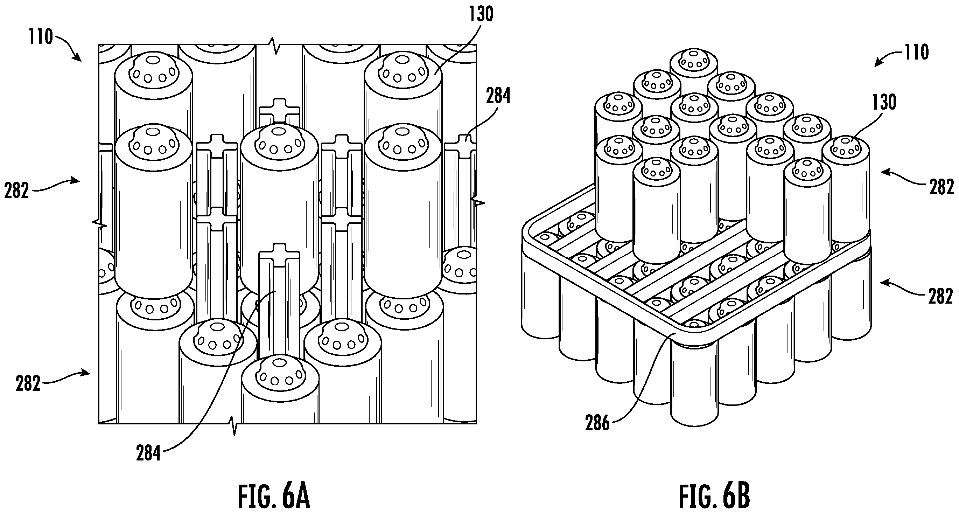

FIG. 6A is a schematic diagram depicting the exemplary additive manufacturing build 110 in accordance with the present disclosure. In the illustrated embodiment, the additive manufacturing build 110 includes the one or more objects 130. The one or more objects 130 may be formed or delineated into one or more vertically disposed build layers 282, and multiple objects 130 may be formed within each build layer 282. In the illustrated embodiment, the additive manufacturing build 110 includes one or more sacrificial supports 284. The one or more sacrificial supports 284 are formed during the printing process (i.e., bonded particles of the powder build material 114 extending one or more of the build layers 282 also in a green state) such that each sacrificial support 284 is disposed between one or more of the objects 130 within the powder build material 114. The one or more sacrificial support 284 may be connected to one or more of the objects 130. If sacrificial supports 284 are connected to one or more of the objects 130, the connection may be a relatively thin layer of the build material to facilitate the removal or disconnection of the sacrificial support 284 from the object 130 without causing damage to the object 130. For example, the sacrificial supports 284 may be formed having a cross-sectional area providing support to the one or more objects 130 within the powder build material 114 while also being easily removed or detached from the one or more objects 130 after the printing process. Thus, for example, the sacrificial supports 284 may generally have a small cross-sectional area as compared to the one or more objects 130 such that detachment of the sacrificial supports 284 from the one or more objects 130 requires minimal effort, such as minor machining, cutting, or manual separation of the object 130 from the sacrificial support 284. In exemplary embodiments, the sacrificial supports 284 are spaced apart from the one or more objects 130 such that small gaps may reside between the sacrificial supports 284 and the one or more objects 130. During the de-powdering of the additive manufacturing build, the sacrificial supports 284 prevent significant movement of the objects 130 due to an absence of powder build material between the objects 130 to prevent damage that may otherwise occur from green parts colliding with each other or colliding with a wall or base of the build box. In the illustrated embodiment, the sacrificial supports 284 extend vertically within the additive manufacturing build 110. However, it should be understood that the sacrificial supports 284 may extend in alternative or additional directions with respect to the objects 130.

FIG. 6B is a schematic diagram depicting the exemplary additive manufacturing build 110 in accordance with the present disclosure. In the illustrated embodiment, the additive manufacturing build 110 includes the one or more objects 130. The one or more objects 130 may be formed or delineated into the one or more vertically disposed build layers 282, and multiple objects 130 may be formed within each build layer 282. In the illustrated embodiment, the additive manufacturing build 110 includes one or more sacrificial supports 286. The one or more sacrificial supports 286 are formed during the printing process (i.e., bonded particles of the powder build material 114 extending one or more of the build layers 282 also in a green state) such that each sacrificial support 286 is disposed between one or more of the objects 130 within the powder build material 114. The sacrificial supports 286 may be connected to or spaced apart from the objects 130 as described above in connection with the sacrificial supports 284 (FIG. 6A). In the illustrated embodiment, the sacrificial support 286 is disposed between adjacent build layers 282. During the de-powdering of the additive manufacturing build, the sacrificial supports 286 prevent significant movement of the objects 130 due to an absence of powder build material between the objects to prevent damage that may otherwise occur from green parts colliding with each other or a wall of the build box. In the illustrated embodiment, the sacrificial supports 286 extend laterally within the additive manufacturing build 110. However, it should be understood that the sacrificial supports 286 may extend in alternative or additional directions with respect to the objects 130.

Referring now to FIG. 7, an example computing system 300 according to example embodiments of the present disclosure is depicted. The computing system 300 can be considered to be a controller, such as the controller 164, and used, for example, to control various operations associated with the automated de-powdering systems 100 and 200 such as, but not limited to, controlling actuation, vibration frequency(ies) of one or more of the vibration mechanisms 150 or 250. The computing system 300 can include one or more computing device(s) 310. The computing device(s) 310 can include one or more processor(s) 310A and one or more memory device(s) 310B. The one or more processor(s) 310A can include any suitable processing device, such as a microprocessor, microcontroller, integrated circuit, logic device, and/or other suitable processing device. The one or more memory device(s) 310B can include one or more computer-readable media, including, but not limited to, non-transitory computer-readable media, RAM, ROM, hard drives, flash drives, and/or other memory devices.

The one or more memory device(s) 310B can store information accessible by the one or more processor(s) 310A, including computer-readable instructions 310C that can be executed by the one or more processor(s) 310A. The instructions 310C can be any set of instructions that when executed by the one or more processor(s) 310A, cause the one or more processor(s) 310A to perform operations. In exemplary embodiments, the instructions 310C can be executed by the one or more processor(s) 310A to cause the one or more processor(s) 310A to perform operations, such as any of the operations and functions for which the computing system 300 and/or the computing device(s) 310 are configured, the operations for operating the system 10, as described herein, and/or any other operations or functions of the one or more computing device(s) 310. Accordingly, the operations performed by the automated de-powdering system 100 or 200 may be computer-implemented processes. The instructions 310C can be software written in any suitable programming language or can be implemented in hardware. Additionally, and/or alternatively, the instructions 310C can be executed in logically and/or virtually separate threads on processor(s) 310A. The memory device(s) 310B can further store data 310D that can be accessed by the processor(s) 310A. For example, the data 310D can include data indicative of vibration frequency(ies) for one or more of the vibration mechanisms 250.

The computing device(s) 310 can also include a network interface 310E used to communicate, for example, with the other components of system 300 (e.g., via a network). The network interface 310E can include any suitable components for interfacing with one or more network(s), including for example, transmitters, receivers, ports, controllers, antennas, and/or other suitable components. One or more external display devices (not depicted) can be configured to receive one or more commands from the computing device(s) 310.

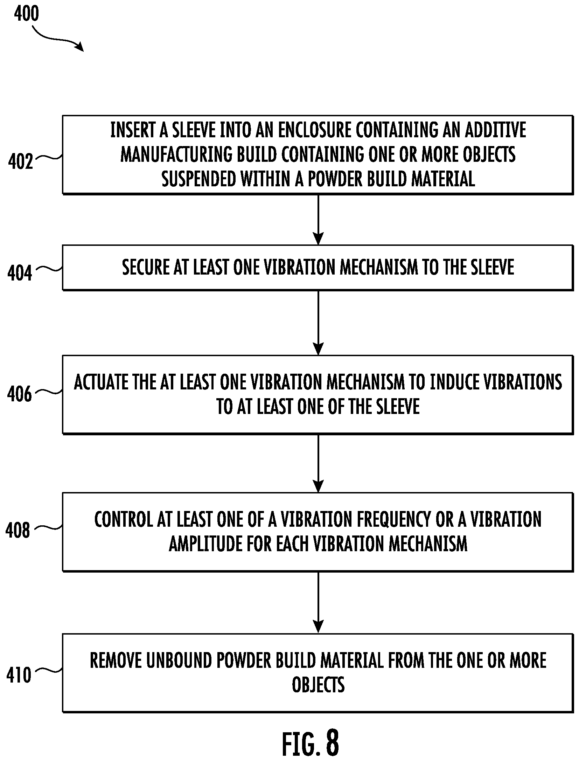

Referring to FIG. 8, a block diagram depicting an exemplary automated method 400 of automated de-powdering of the additive manufacturing build is provided. The method 400 begins at 402, where a sleeve is inserted into an enclosure containing an additive manufacturing build containing one or more objects suspended within a powder build material. The enclosure may be the build box containing the additive manufacturing build while being printed or may be a separate enclosure into which the additive manufacturing build has been placed. At 404, at least one vibration mechanism is secured to the sleeve. At 406, the at least one vibration mechanism is actuated to induce vibrations to the sleeve. As described above, the vibrations are transferred or conducted into the additive manufacturing build from the sleeve. At 208, a vibration frequency for each vibration mechanism is controlled. At 410, unbound powder build material is removed from the one or more objects.

Thus, embodiments of the present disclosure provide an apparatus and technique for automated de-powdering of an additively manufactured three-dimensional object. In exemplary embodiments, the de-powdering apparatus includes an enclosure for containing or supporting an additive manufacturing build, and a sleeve insertable into the enclosure that substantially surrounds the additive manufacturing build. One or more vibration mechanisms may be actuated to transfer vibrations to the powder bed through at least one or more of the sleeve, the bottom wall of the enclosure, or directly within the powder bed. One or more of the vibration mechanisms may be independently controlled as to vibration frequency(ies) to loosen the unbound powder material while avoiding or substantially preventing damage to the green additively manufactured objects. The loosened powder build material can be easily evacuated/vacuumed from the enclosure as well as draining from the enclosure through flow channels formed in the bottom wall of the enclosure leaving the green-bodies de-powdered.

Further aspects of the presently disclosed subject matter are provided by the following clauses:

A de-powdering system for additively manufactured objects, comprising: an enclosure defining a cavity configured to support an additive manufacturing build, the additive manufacturing build comprising one or more objects suspended within a powder build material, the enclosure including a wall defining a lower boundary of the cavity, wherein the wall includes one or more flow channels; a sleeve disposable in the cavity wherein the sleeve at least partially surrounds the additive manufacturing build; at least one vibration mechanism coupled to at least one of the sleeve or the enclosure, the at least one vibration mechanism actuatable to induce vibrations to the additive manufacturing build to loosen at least a portion of the powder material, the at least the portion of the powder material removed from the cavity via the one or more flow channels.

The de-powdering system of the preceding clause, further comprising a plate couplable to the enclosure, the plate movable to expose at least one of the one or more flow channels to the cavity.

The de-powdering system of any preceding clause, wherein the enclosure includes a plurality of sidewalls defining the cavity, and wherein at least one of the plurality of sidewalls of the enclosure includes an opening for receiving the plate.

The de-powdering system of any preceding clause, wherein the at least one vibration mechanism comprises at least one of an ultrasonic transducer or a pneumatic transducer.

The de-powdering system of any preceding clause, wherein the plurality of sidewalls define an open top of the sleeve and an open bottom of the sleeve, and wherein the open bottom of the sleeve is positionable adjacent the lower boundary of the cavity.

The de-powdering system of any preceding clause, wherein the at least one vibration mechanism is coupled proximate the open top of the sleeve.

The de-powdering system of any preceding clause, further comprising a controller configured to control a vibration frequency of the at least one vibration mechanism.

The de-powdering system of any preceding clause, wherein the at least one vibration mechanism comprises a plurality of vibration mechanisms, and wherein the controller is configured to independently control the vibration frequency for each of the plurality of vibration mechanisms.

The de-powdering system of any preceding clause, wherein the at least one vibration mechanism comprises a first vibration mechanism and a second vibration mechanism, wherein the first vibration mechanism is coupled to at least one of the sleeve or the enclosure, and wherein the second vibration mechanism is disposed within the additive manufacturing build to contact the wall of the enclosure.

The de-powdering system of any preceding clause, wherein the sleeve comprises one or more stiffening ribs.

The de-powdering system of any preceding clause, wherein the additive manufacturing build includes one or more sacrificial supports.

The de-powdering system of any preceding clause, wherein the one or more sacrificial supports are disposed between or in contact with the one or more objects.

A de-powdering system for additively manufactured objects, comprising: a build box defining a cavity configured to support an additive manufacturing build, the build box including a build plate defining a lower boundary of the cavity, wherein the build plate includes one or more flow channels; a sleeve comprising a plurality of sidewalls, the sleeve disposable in the cavity wherein the plurality of sidewalls extend about a perimeter of the cavity; at least one vibration mechanism coupled to at least one of the sleeve or the build box, the at least one vibration mechanism actuatable to induce vibrations to the at least one of the sleeve or the build box; and a plate couplable to the build box, the plate movable to expose at least one of the one or more flow channels to the cavity.

The de-powdering system of any preceding clause, wherein the build box includes a plurality of sidewalls defining the cavity, and wherein at least one of the plurality of sidewalls of the build box includes an opening, and wherein the plate is insertable through the opening and into the cavity.

The de-powdering system of any preceding clause, wherein the bottom wall of the build box includes a first surface facing the cavity and a second surface opposite the first surface, and wherein the plate is disposable within the cavity proximate the first surface.

The de-powdering system of any preceding clause, wherein the plurality of sidewalls define an open top of the sleeve and an open bottom of the sleeve, and wherein the open bottom of the sleeve is positionable adjacent the lower boundary of the cavity.

The de-powdering system of any preceding clause, wherein the at least one vibration mechanism is coupled to at least one of the plurality of sidewalls proximate the open top of the sleeve.

The de-powdering system of any preceding clause, further comprising a controller configured to control a vibration frequency of the at least one vibration mechanism.

The de-powdering system of any preceding clause, wherein the at least one vibration mechanism comprises a first vibration mechanism and a second vibration mechanism, wherein the first vibration mechanism is coupled to at least one of the sleeve or the build box, and wherein the second vibration mechanism is disposed within the additive manufacturing build to contact the build plate.

The de-powdering system of any preceding clause, wherein the at least one vibration mechanism comprises at least one of a pneumatic transducer or an ultrasonic transducer.

A method for de-powdering additively manufactured objects, comprising: inserting a sleeve into an enclosure, wherein the enclosure defines a cavity supporting an additive manufacturing build containing one or more objects suspended with a power build material, wherein the sleeve comprises a plurality of sidewalls configured to extend about a perimeter of the cavity, and wherein the enclosure includes a bottom wall defining a lower boundary of the cavity, and wherein the bottom wall includes one or more flow channels; securing at least one vibration mechanism to at least one of the sleeve or the enclosure; and actuating the at least one vibration mechanism to induce vibrations to at least one of the sleeve or the enclosure, wherein unbound powder build material is removed from the cavity via the one or more flow channels.

The method of any preceding clause, wherein the at least one vibration mechanism comprises a plurality of vibration mechanisms, and further comprising independently controlling a vibration frequency for each of the plurality of vibration mechanisms.

The method of any preceding clause, wherein the at least one vibration mechanism comprises a first vibration mechanism and a second vibration mechanism, wherein the securing comprises securing the first vibration mechanism to at least one of the sleeve or the enclosure, and further comprising disposing the second vibration mechanism within the additive manufacturing build in contact with the bottom wall.

A de-powdering system for additively manufactured objects, comprising: a sleeve disposable in an enclosure, the enclosure configured to support an additive manufacturing build, the sleeve including a wall defining a lower boundary of the sleeve, wherein the bottom wall includes one or more flow channels, and wherein the sleeve is configured to at least partially surrounds the additive manufacturing build within the enclosure, the sleeve removable from the enclosure with the additive manufacturing build residing within the sleeve; and at least one vibration mechanism coupled to the sleeve, the at least one vibration mechanism actuatable to induce vibrations to the additive manufacturing build to loosen at least a portion of a powder build material from one or more objects suspended within the powder build material, the at least the portion of the powder build material removed from the sleeve via the one or more flow channels.

The de-powdering system of any preceding clause, wherein the at least one vibration mechanism comprises a plurality of vibration mechanisms, and further comprising a controller configured to independently control a vibration frequency for each of the plurality of vibration mechanisms.

The de-powdering system of any preceding clause, wherein the at least one vibration mechanism comprises a first vibration mechanism and a second vibration mechanism, wherein the first vibration mechanism is secured to the sleeve, and wherein the second vibration mechanism is disposed within the additive manufacturing build in contact with the bottom wall.

This written description uses examples to describe the presently disclosed subject matter, including the best mode, and also to enable any person skilled in the art to practice such subject matter, including making and using any devices or systems and performing any incorporated methods. The patentable scope of the presently disclosed subject matter is defined by the claims, and may include other examples that occur to those skilled in the art. The scope of the claims encompasses such other examples that include structural elements that do not differ from the literal language of the claims or that have insubstantial differences from the literal languages of the claims.

## Claims

1. A de-powdering system for additively manufactured objects, comprising:
an enclosure defining a cavity configured to support an additive manufacturing build, the enclosure including a wall defining a lower boundary of the cavity, wherein the wall includes one or more flow channels;
a sleeve disposable in the cavity to at least partially surround the additive manufacturing build; and
at least one vibration mechanism coupled to the sleeve, the at least one vibration mechanism actuatable to induce vibrations to the additive manufacturing build to loosen at least a portion of a powder build material from one or more objects suspended within the powder build material, the at least the portion of the powder build material removed from the cavity via the one or more flow channels.

2. The de-powdering system of claim 1, further comprising a plate removably coupled to the enclosure, the plate movable to expose at least one of the one or more flow channels to the cavity.

3. The de-powdering system of claim 2, wherein the enclosure includes a plurality of sidewalls defining the cavity, and wherein at least one sidewall of the plurality of sidewalls of the enclosure includes an opening, wherein the plate is insertable through the opening and into the cavity.

4. The de-powdering system of claim 1, wherein the at least one vibration mechanism comprises at least one of an ultrasonic transducer or a pneumatic transducer.

5. The de-powdering system of claim 1, wherein the sleeve comprises a plurality of sidewalls defining an open top of the sleeve and an open bottom of the sleeve, and wherein the open bottom of the sleeve is adjacent to the lower boundary of the cavity when the sleeve is positioned in the cavity.

6. The de-powdering system of claim 5, wherein the at least one vibration mechanism is coupled to the open top of the sleeve.

7. The de-powdering system of claim 1, further comprising a controller configured to control a vibration frequency of the at least one vibration mechanism.

8. The de-powdering system of claim 7, wherein the at least one vibration mechanism comprises a plurality of vibration mechanisms, and wherein the controller is configured to independently control the vibration frequency for each of the plurality of vibration mechanisms.

9. The de-powdering system of claim 1, wherein the at least one vibration mechanism comprises a first vibration mechanism and a second vibration mechanism, wherein the first vibration mechanism is coupled to at least one of the sleeve or the enclosure, and wherein the second vibration mechanism is disposed within the additive manufacturing build to contact the wall of the enclosure.

10. A de-powdering system for additively manufactured objects, comprising:
a build box defining a cavity configured to support an additive manufacturing build, the build box including a build plate defining a lower boundary of the cavity, wherein the build plate includes one or more flow channels;
a sleeve comprising a plurality of sidewalls, the sleeve disposable in the cavity, wherein the plurality of sidewalls extend around a perimeter of the cavity;
at least one vibration mechanism coupled to the sleeve, the at least one vibration mechanism actuatable to induce vibrations to the sleeve; and
a plate removably couplable to the build box, the plate movable to expose at least one of the one or more flow channels to the cavity.

11. The de-powdering system of claim 10, wherein the build box includes a plurality of sidewalls defining the cavity, and wherein at least one sidewall of the plurality of sidewalls of the build box includes an opening, and wherein the plate is insertable through the opening and into the cavity.

12. The de-powdering system of claim 10, wherein the build plate of the build box includes a first surface facing the cavity and a second surface opposite the first surface, and wherein the plate is disposable within the cavity proximate the first surface.

13. The de-powdering system of claim 10, wherein the plurality of sidewalls define an open top of the sleeve and an open bottom of the sleeve, and wherein the open bottom of the sleeve is adjacent to the lower boundary of the cavity when the sleeve is positioned in the cavity.

14. The de-powdering system of claim 13, wherein the at least one vibration mechanism is coupled to at least one of the plurality of sidewalls of the sleeve.

15. The de-powdering system of claim 10, wherein the at least one vibration mechanism comprises a first vibration mechanism and a second vibration mechanism, wherein the first vibration mechanism is coupled to at least one of the sleeve or the build box, and wherein the second vibration mechanism is disposed within the additive manufacturing build to contact the build plate.
